# NEUE EUROPÄISCHE PATENTSCHRIFT

(11) **EP 4 011 197 B2**
(45) Veröffentlichungstag und Bekanntmachung des Hinweises auf die Entscheidung über den Einspruch: **28.10.2026**
(45) Hinweis auf die Patenterteilung: 30.08.2023
(21) Anmeldenummer: 20213470.6
(22) Anmeldetag: 11.12.2020
(51) Int. Cl.: A01G 20/47

(54) **ARBEITSGERÄT MIT EINEM ZWISCHEN EINER ANTRIEBSEINHEIT UND EINEM BEDIENGRIFF GEFÜHRTEN KABELBAUM**
WORKING TOOL WITH A CABLE HARNESS BETWEEN A DRIVE UNIT AND AN OPERATING HANDLE
APPAREIL DE TRAVAIL DOTÉ D'UN FAISCEAU DE CÂBLES GUIDÉ ENTRE UNE UNITÉ D'ENTRAÎNEMENT ET UNE POIGNÉE DE COMMANDE

(43) Veröffentlichungstag der Anmeldung: 15.06.2022
(73) Patentinhaber: Andreas Stihl AG & Co. KG, 71336 Waiblingen (DE)
(72) Erfinder: DETTLING, Andreas, 70599 Stuttgart (DE); KARL, Dennis, 71691 Freiberg (DE); EHRLER, Dennis, 73249 Wernau (DE); KÖNIG, Markus, 70771 Leinfelden- Echterdingen (DE); WAIBLINGER, Manuel, 70597 Stuttgart (DE); BRAUN, Jan Lukas, 71334 Waiblingen (DE); HÄRTEL, Alexander, 71640 Ludwigsburg (DE)
(74) Vertreter: Wasmuth, Rolf

(56) Entgegenhaltungen:
- EP-A1- 0 667 980
- EP-A1- 2 177 297
- WO-A1-94/11887
- DE-A1- 102005 007 675
- DE-A1- 102005 055 614
- DE-A1- 102010 011 986
- FR-A1- 2 839 850
- JP-A- 2017 191 774
- US-A- 4 881 909
- US-A- 5 750 932
- US-A- 5 813 088
- US-A1- 2010 018 746
- US-A1- 2017 007 085
- "Vacuum cleaner", WIKIPEDIA, 19 November 2018 (2018-11-19), pages 1 - 12, XP093191749, Retrieved from the Internet <URL:https://web.archive.org/web/20181119133945/https://en.wikipedia.org/wiki/Vacuum_cleaner>
- "Flexible cable", WIKIPEDIA, 10 June 2015 (2015-06-10), pages 1 - 2, XP093191752, Retrieved from the Internet <URL:https://web.archive.org/web/20150610150814/https://en.wikipedia.org/wiki/Flexible_cable>
- "Workshop manual Husqvarna 340iBT", WORKSHOP MANUAL HUSQVARNA 340IBT, HUSQVARNA, 8 November 2019 (2019-11-08), pages 1 - 32, XP093191798, Retrieved from the Internet <URL:https://www.manualslib.com/manual/1713480/Husqvarna-340ibt.html#manual>
- "Operator's manual Husqvarna 340iBT", OPERATOR'S MANUAL 340IBT, HUSQVARNA, 24 September 2019 (2019-09-24), pages 1 - 48, XP093191803, Retrieved from the Internet <URL:https://www-static-nw.husqvarna.com/hbd/tdrdownload/v2/pub000077801/doc000133196/OM/f1lcvGYowCeSmfUBEjvWgqlNTq4>

## Beschreibung

Die Erfindung betrifft ein Arbeitsgerät mit einer Antriebseinheit und einem Bediengriff. Das Arbeitsgerät ist ein Blasgerät mit einem Blasrohr. Der Bediengriff ist über elektrische Leitungen mit der Antriebseinheit verbunden, wobei eine elektrische Leitung an einer ersten elektrischen Anschlussstelle im Bediengriff und an einer zweiten Elektrischen Anschlussstelle an der Antriebseinheit festgelegt ist. Ein gattungsgemäßes Blasgerät ist aus DE 10 2005 007675 A1 bekannt.

Einige der elektrischen Leitungen sind zu einem Leitungsbündel zusammengefasst und gemeinsam von dem Bediengriff zu der Antriebseinheit geführt.

Ist zum Beispiel bei einem Blasgerät der Bediengriff zum Führen des Blasluftstroms auf dem Blasrohr gehalten, kann ein Leitungsbündel oder Kabelbaum auf der Außenseite des Blasrohrs befestigt vom Bediengriff zur Antriebseinheit geführt werden. Die Anordnung birgt die Gefahr, dass im Umfeld der durchzuführenden Arbeiten Fremdkörper wie Äste oder dergleichen in das Leitungsbündel einhaken und die Bedienung des Blasrohrs behindern. Dabei ist zu berücksichtigen, dass auf einzelne elektrische Leitungen eine hohe Querkraft und/oder Zugkraft wirkt, was zu einem Abriss der elektrischen Leitung an den Anschlussstellen oder auch zu einem Reißen der elektrischen Leitung selbst führen kann. Dieses Problem tritt insbesondere dann auf, wenn die elektrischen Leitungen als Signalleitungen und daher mechanisch nur wenig belastbar ausgebildet sind.

Der Erfindung liegt die Aufgabe zugrunde, ein Arbeitsgerät mit einer Antriebseinheit und einem Bediengriff derart weiterzubilden, dass zwischen dem Bediengriff und der Antriebseinheit geführte elektrische Leitungen, insbesondere elektrische Signalleitungen, gegen Schädigungen wie z. B. einem Kontaktabriss durch einwirkende mechanische Kräfte geschützt sind.

Die Aufgabe wird erfindungsgemäß nach den Merkmalen des Anspruchs 1 gelöst. Zumindest neben einer an den elektrischen Anschlussstellen angeschlossenen elektrischen Leitung ist ein zwischen dem Bediengriff und der Antriebseinheit verlaufendes Sicherungsseil vorgesehen. Das Sicherungsseil verläuft vorzugsweise längs der elektrischen Leitung, insbesondere parallel zu der elektrischen Leitung. Ein Endabschnitt des Sicherungsseils ist am, insbesondere im Bediengriff mechanisch fixiert. Der andere Endabschnitt des Sicherungsseils ist an oder in der Antriebseinheit mechanisch festgelegt. Die Anordnung ist vorzugsweise so getroffen, dass die elektrische Leitung zusammen mit dem Sicherungsseil geführt ist. Das Sicherungsseil bildet eine Abreißsicherung für die elektrische Leitung.

Das Sicherungsseil kann vorzugsweise mechanisch parallel zu der elektrischen Leitung geführt und kann im Bereich der Anschlussstellen der elektrischen Leitung einerseits am Bediengriff und andererseits an der Antriebseinheit mechanisch fixiert werden. Da die elektrische Leitung zusammen mit dem Sicherungsseil geführt ist, wird ein eingreifender Fremdkörper das Sicherungsseil zusammen mit der elektrischen Leitung erfassen und eine Querkraft auf den Verbund aus elektrischer Leitung und Sicherungsseil ausüben. Die Länge des Sicherungsseils ist dabei so bemessen, dass vor einem Abreißen der elektrischen Leitung an den Anschlussstellen das Sicherungsseil gespannt wird und die eingeleitete Querkraft mechanisch einerseits an den Bediengriff und andererseits an die Antriebseinheit weiterleitet.

Ein Abreißen der elektrischen Leitung an ihren Anschlussstellen ist sicher verhindert.

Das Sicherungsseil ist elektrisch leitend ausgebildet. Das Sicherungsseil bildet somit einerseits eine mechanische Abreißsicherung und andererseits eine elektrische Leitung.

Es ist vorgesehen, dass das Sicherungsseil am Bediengriff elektrisch leitend kontaktiert ist und an der Antriebseinheit elektrisch leitend angeschlossen ist. Wird der Bediengriff mit einer äußeren, elektrisch leitenden Mantelfläche versehen und diese elektrisch leitende Mantelfläche mit dem Sicherungsseil elektrisch leitend kontaktiert, so wird über das Sicherungsseil ein Potenzialausgleich zwischen dem Bediengriff und der Antriebseinheit hergestellt.

Um die elektrische Funktion des Sicherungsseils von seiner mechanischen Funktion als Abreißsicherung zu entkoppeln, ist vorgesehen, dass der andere Endabschnitt des Sicherungsseils im Bereich vor seinem Ende mechanisch festgelegt ist und dass das bis zum Ende weitergeführte Sicherungsseil in seiner Funktion als elektrische Leitung mit einem elektrischen Anschlusspunkt verbunden ist. Auf diese Weise ist sichergestellt, dass auf das Sicherungsseil wirkende Kräfte im Bereich vor dem (elektrischen) Ende des Sicherungsseils abgeleitet werden und die Verbindung am elektrischen Anschlusspunkt mechanisch kraftfrei bleibt. Eine zweckmäßige mechanische Anbindung des Sicherungsseils ist vorteilhaft über Formnippel hergestellt.

Zumindest einige der elektrischen Leitungen sind zu einem Leitungsbündel zusammengefasst. Das Leitungsbündel und das Sicherungsseil sind gemeinsam von dem Bediengriff zu der Antriebseinheit geführt. Vorteil- haft sind das Leitungsbündel bzw. der Kabelbaum und das Sicherungsseil innerhalb eines Kabelschlauchs geführt. Andere Ausführungen können vorteilhaft sein.

Zum Schutz der neben dem Sicherungsseil verlaufenden elektrischen Leitungen kann das Sicherungsseil zweckmäßig mit einer Ummantelung versehen sein. Diese Ummantelung kann aus einem Material mit niedrigem Reibungskoeffizienten ausgeführt sein, damit bei Relativbewegungen zwischen dem Sicherungsseil und den elektrischen Leitungen kein Abrieb der Isolierung der elektrischen Leitungen auftritt. Zweckmäßig besteht die Ummantelung des Sicherungsseils aus einem flexiblen Material mit guten Gleiteigenschaften, vorzugsweise aus Kunststoff, insbesondere aus Polyazetal (POM). Für eine gute mechanische Anbindung des Sicherungsseils an der Antriebseinheit ist vorteilhaft vorgesehen, dass das Sicherungsseil innerhalb der Antriebseinheit aus der Ummantelung herausgeführt ist und in diesem Bereich einen Formnippel für eine mechanische Anbindung an die Antriebseinheit trägt.

Das elektrisch leitende Sicherungsseil ist bevorzugt als Stahlseil ausgebildet, wobei ein mehradriges Stahlseil für eine gute Flexibilität zweckmäßig ist.

Das Arbeitsgerät ist ein Blasgerät mit einem Blasrohr. Der Bediengriff ist auf dem Blasrohr gehalten, so dass der Benutzer das Blasrohr mittels dem Bediengriff halten und führen kann. Im Bediengriff sind Betätigungselemente zur Bedienung der Antriebseinheit vorgesehen.

Ist die Antriebseinheit ein Elektromotor, sind zur Steuerung der Antriebseinheit mehrere elektrische Leitungen, insbesondere Signalleitungen, zwischen dem Bediengriff und der Antriebseinheit vorgesehen. Die zu einem Leitungsbündel zusammengefassten elektrischen Leitungen sind außerhalb des Blasrohrs geführt. Durch die Verwendung des Sicherungsseils ist gewährleistet, dass auch bei einem Eingriff eines Fremdkörpers an dem Verbund aus Sicherungsseil und elektrischen Leitungen die auftretenden Kräfte nicht zu einem Abriss der elektrischen Leitungen an ihren Anschlussstellen führen können.

In besonderer Ausgestaltung der Erfindung ist vorgesehen, dass die Länge der elektrischen Leitung größer oder gleich ist wie die Länge des Sicherungsseils zwischen seiner mechanischen Anbindung am Bediengriff und seiner mechanischen Anbindung an der Antriebseinheit. Damit ist gewährleistet, dass das Sicherungsseil kraftbelastet wird, bevor eine entsprechende Kraftbelastung an den elektrischen Leitungen auftreten kann.

Ein Ausführungsbeispiel der Erfindung ist nachfolgend in seinen Merkmalen mit Bezug auf die Zeichnungen im Einzelnen beschrieben. Die in den Ansprüchen, der Beschreibung und den Zeichnungen wiedergegebenen Merkmale können untereinander beliebig kombiniert werden, ohne den Gedanken der offenbarten Erfindung zu verlassen. Es zeigen:
- Fig. 1: eine Teildarstellung eines Arbeitsgerätes am Beispiel eines insbesondere rückengetragenen Blasgerätes mit einem Elektromotor als Antriebseinheit,
- Fig. 2: eine schematische Darstellung zur Führung von gebündelten elektrischen Leitungen zwischen einem Bediengriff des Arbeitsgerätes und der Antriebseinheit des Arbeitsgerätes,
- Fig. 3: in vergrößerter Darstellung die mechanische Anbindung des Sicherungsseils an der Antriebseinheit,
- Fig. 4: in vergrößerter Darstellung die mechanische Anbindung des Sicherungsseils am Bediengriff,
- Fig. 5: in vergrößerter Darstellung die gekoppelte elektrische und mechanische Anbindung des Sicherungsseils am Bediengriff,
- Fig. 6: in schematischer Darstellung die Anschlussstellen der elektrischen Leitungen eines Kabelbaums in dem Gehäuse der Antriebseinheit in Kombination mit der mechanischen und elektrischen Anbindung des Endabschnittes des Sicherungsseils an der Antriebseinheit.

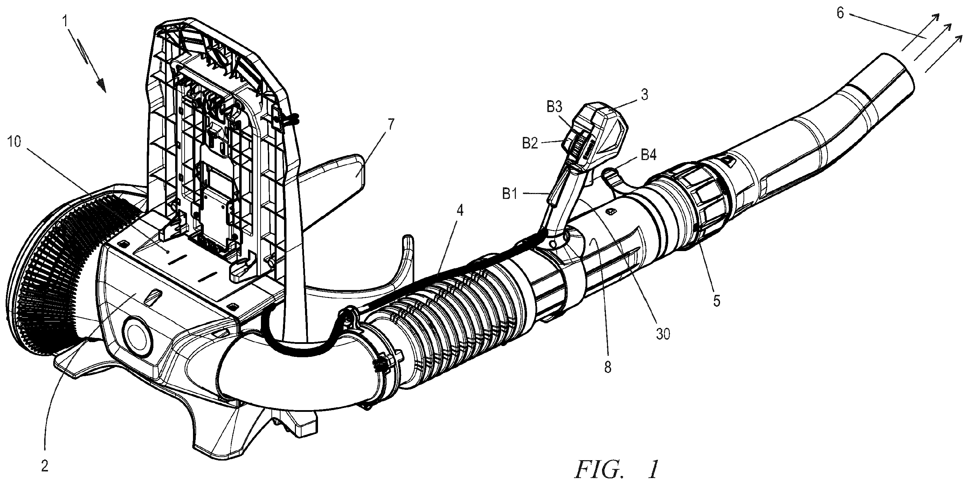

In Fig. 1 ist am Beispiel eines Blasgerätes 10 ein Arbeitsgerät 1 gezeigt, welches eine Antriebseinheit 2 sowie einen Bediengriff 3 für einen Benutzer aufweist. Das Arbeitsgerät 1 kann auch als Freischneider, Hochentaster oder dgl. Arbeitsgerät 1 mit einem Bediengriff 3 ausgebildet sein.

Bei dem gezeigten Blasgerät 10 ist der Bediengriff 3 auf einem Blasrohr 5 gehalten. Das Blasrohr 5 wird vom Benutzer mittels des Bediengriffes 3 zur Steuerung des Blasluftstroms 6 geführt. Das Arbeitsgerät 1 wird auf dem Rücken eines Benutzers getragen und über einen Hüftgurt 7 auf der Hüfte des Benutzers gesichert. Zur Steuerung der insbesondere elektrischen Antriebseinheit 2 weist der Bediengriff mehrere Bedienelemente B1 bis B4 auf. Die Bedienelemente B1 bis B4 können elektrische Schalter S1, elektrische Stellelemente oder dergleichen im Bediengriff 3 betätigen.

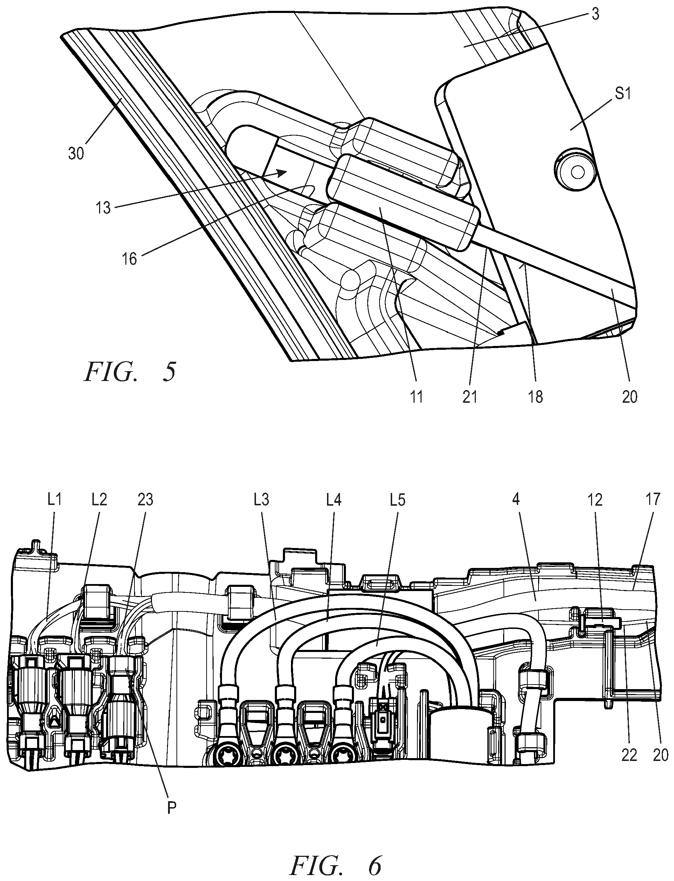

Zur Übermittlung elektrischer Steuerungssignale, insbesondere elektrische Stellgrößen und/oder Betriebsgrößen ist der Bediengriff 3 über vorzugsweise mehrere elektrische Leitungen L1 bis L5 (Fig. 6) mit der Antriebseinheit 10 verbunden. In dem schematischen Ausführungsbeispiel nach Figur 1 sind mehrere elektrische Leitungen zusammengefasst geführt, zu einem Leitungsbündel zusammengefasst. Die elektrischen Leitungen sind insbesondere Signalleitungen. Gegenüber leistungsübertragenden elektrischen Leitungen sind Signalleitungen mechanisch nur wenig belastbar und können bei Einwirkung von Querkräften oder Zugkräften mechanisch beschädigt werden. Ein mechanischer Schaden an einer Signalleitung kann ein Abreißen von einer Anschlussstelle sein oder auch ein innerer Bruch der elektrischen Leitung.

Wie Figur 1 zeigt, sind in dem gezeigten Ausführungsbeispiel die elektrischen Leitungen, insbesondere der Kabelbaum 4 auf dem Außenumfang 8 des Blasrohrs 5 vom Bediengriff 3 zur Antriebseinheit 2 geführt.

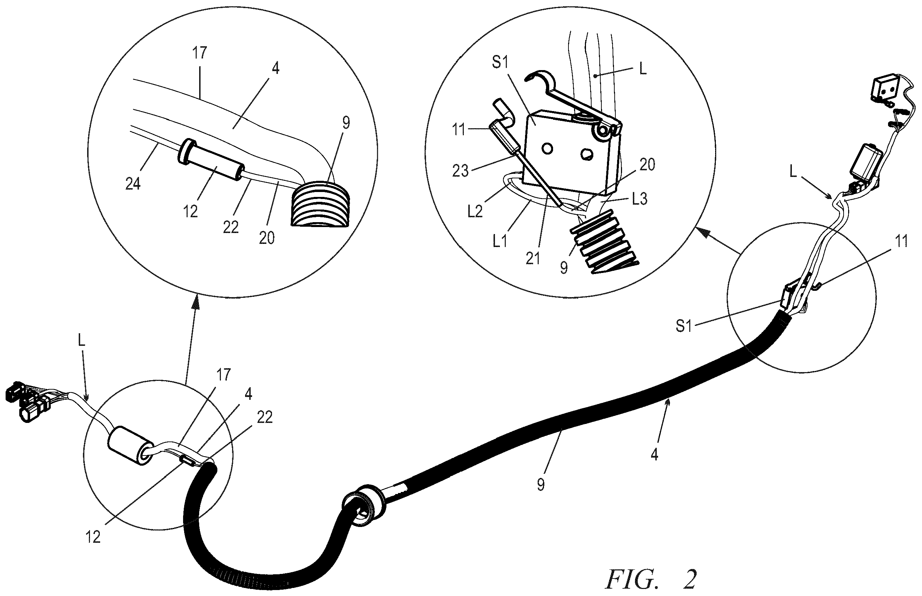

In Fig. 2 ist eine schematische Darstellung der elektrischen Leitungen L als Kabelbaum 4 in einem Kabelschlauch 9 geführt. Wie der Darstellung zu entnehmen, verläuft längs zumindest einer elektrischen Leitung L1, L2, L3 ein Sicherungsseil 20. Im Ausführungsbeispiel nach Figur 2 ist das Sicherungsseil 20 längs einer, insbesondere parallel zu einer Leitung L1, L2 oder L3 geführt, insbesondere innerhalb eines Leitungsbündels L oder eines Kabelbaums 4. Das Sicherungsseil 20 verläuft - zusammen mit dem Leitungsbündel L bzw. dem Kabelbaum 4 - im Kabelschlauch 9. Es kann vorteilhaft sein, das Sicherungsseil 20 vom Leitungsbündel L bzw. dem Kabelbaum 4 getrennt im Kabelschlauch 9 zu führen.

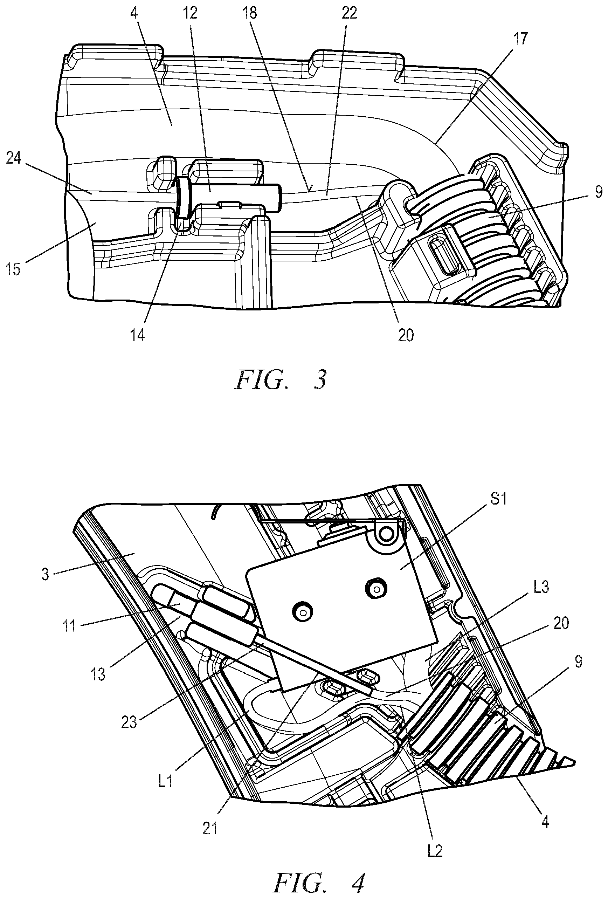

Das Sicherungselement 20 wird mit einem Endabschnitt 21 (Fig. 4) am Bediengriff 3, insbesondere im Inneren des Bediengriffs 3 festgelegt. Hierzu weist das Ende 23 des Sicherungsseils 20 einen Formnippel 11 auf, der in eine entsprechende Nippelaufnahme 13 des Bediengriffes 3 eingreift. Innerhalb des Bediengriffes 3 ist der Formnippel 11 formschlüssig gehalten. Das Sicherungsseil 20 ist an seinem einen Endabschnitt 21 mechanisch fixiert.

Am anderen Endabschnitt 22 des Sicherungsseils 20 (Fig. 3 und Fig. 2 links) ist ein Formnippel 12 gehalten, der in eine Nippelaufnahme 14 des Gehäuses 15 der Antriebseinheit 2 eingreift. Mit dem Formnippel 12 ist der andere Endabschnitt 22 des Sicherungsseils 20 an der Antriebseinheit 2, vorzugsweise an dem Gehäuse 15 der Antriebseinheit 2, mechanisch festgelegt.

Das Sicherungsseil 20 erstreckt sich insbesondere längs der Leitungen L1, L2, L3, vorzugsweise parallel zu den Leitungen L1, L2, L3. Die elektrischen Leitungen L1, L2, L3 sind zusammen mit dem Sicherungsseil 20 vom Bediengriff 3 zur Antriebseinheit 2 geführt. Da das Sicherungsseil 20 im Bereich seiner Endabschnitte 21 und 22 mechanisch einerseits am Bediengriff 3 und andererseits an der Antriebseinheit 2 mechanisch festgelegt ist, bildet das Sicherungsseil 20 eine Abreißsicherung für die längs des Sicherungsseils 20 verlaufenden elektrischen Leitungen L1, L2, L3.

Das Sicherungsseil 20 ist insbesondere als elektrisch leitendes Sicherungsseil 20 ausgebildet. Vorzugsweise besteht das Sicherungsseil 20 aus einem Stahlseil, insbesondere aus einem flexiblen, mehradrigen Stahlseil.

Das elektrisch leitfähige Sicherungsseil 20 ist somit einerseits eine mechanische Abreißsicherung und bildet andererseits eine elektrische Leitung. Das elektrisch leitfähige Sicherungsseil 20 hat eine Doppelfunktion.

Der Bediengriff 3 (Fig. 1) weist vorzugsweise eine äußere, elektrisch leitende Mantelfläche 30 auf, z. B. aus einem elektrisch leitfähigen Kunststoff. Diese elektrisch leitende Mantelfläche 30 wird - wie Fig. 5 zeigt - elektrisch kontaktierend mit dem Formnippel 11 des Sicherungsseils 20 verbunden. Hierzu weist die Nippelaufnahme 13 vorzugsweise eine innere Auskleidung 16 auf, die aus einem elektrisch leitenden Material besteht. Die innere Auskleidung 16 steht elektrisch mit der äußeren Mantelfläche 30 aus elektrisch leitendem Material des Bediengriffes 3 in Verbindung. Vorzugsweise ist die Auskleidung 16 der Nippelaufnahme 13 einteilig mit dem elektrisch leitenden Material der Mantelfläche 30 gefertigt. Durch Eingriff des Formnippels 11 in die mit der Auskleidung 16 versehene Nippelaufnahme 13 wird ein elektrischer Kontakt zwischen dem elektrisch leitenden Sicherungsseil 20 und der äußeren Mantelfläche 30 des Bediengriffes 3 hergestellt.

Das Sicherungsseil 20 ist an seinem anderen Endabschnitt 22 aus einer äußeren Hülle 17 des Leitungsbündels L herausgeführt und mit dem Formnippel 12 versehen. Der Formnippel 12 greift in die insbesondere gehäusefeste Nippelaufnahme 14 ein und stellt die mechanische Anbindung des Sicherungsseils 20 an der Antriebseinheit 2 sicher. Das über den Formnippel 12 hinausragende Ende 24 des Sicherungsseils 20 wird bis zu einem elektrischen Anschlusspunkt P weitergeführt und an diesen elektrisch angeschlossen. Die mechanische Anbindung des Sicherungsseils 20 in der Antriebseinheit 2 erfolgt durch den Formnippel 12. Die Weiterführung des Sicherungsseils 20 über den Formnippel 12 hinaus bildet die elektrische Leitung des Sicherungsseils 20 bis hin zum elektrischen Anschlusspunkt P. Das Sicherungsseil 20 ist im Bereich seines einen Endabschnitts 21 elektrisch leitend mit der Mantelfläche 30 des Bediengriffes 3 verbunden und im Bereich seines anderen Endabschnitts 22 elektrisch leitend an dem Anschlusspunkt P angeschlossen. Das Sicherungsseil 20 kann so einen Potenzialausgleich zwischen dem Bediengriff 3 und der Antriebseinheit 2 herstellen. Zweckmäßig ist der Anschlusspunkt P ein Massepunkt.

Wie im Ausführungsbeispiel dargestellt, kann das Sicherungsseil 20 innerhalb des Leitungsbündels L innerhalb einer gemeinsamen Hülle 17 geführt sein. Um eine mechanische Schädigung der Leitungen des Leitungsbündels L zu verhindern, ist vorgesehen, das Sicherungsseil 20 mit einer Ummantelung 18 aus einem flexiblen Material zu versehen, welches gute Gleiteigenschaften aufweist. Ein geeignetes Material ist Kunststoff, insbesondere eine Ummantelung aus Polyazetal (POM).

## Patentansprüche

1. Arbeitsgerät mit einer Antriebseinheit (2) und einem Bediengriff (3), wobei das Arbeitsgerät (1) ein Blasgerät (10) mit einem Blasrohr (5) ist, und der Bediengriff (3) zur Steuerung der Antriebseinheit (2) mehrere Bedienelemente (B1 bis B4) aufweist, wobei der Bediengriff (3) über elektrische Leitungen (L1, L2, L3, L4) mit der Antriebseinheit (2) verbunden ist, wobei eine elektrische Leitung (L1, L2, L3, L4) an einer ersten elektrischen Anschlussstelle am Bediengriff (3) und an einer zweiten elektrischen Anschlussstelle an der Antriebseinheit (2) festgelegt ist, **dadurch gekennzeichnet,**
- **dass** zumindest einige der elektrischen Leitungen (L1, L2, L3, L4) zu einem Leitungsbündel (L) zusammengefasst sind, und das Leitungsbündel (L) und das Sicherungsseil (20) gemeinsam von dem Bediengriff (3) zu der Antriebseinheit (2) geführt sind,
- **dass** das Leitungsbündel (L) längs und außerhalb des Blasrohrs (5) geführt ist und der Bediengriff (3) auf dem Blasrohr (5) gehalten ist,
- **dass** neben der an den elektrischen Anschlussstellen angeschlossenen elektrischen Leitung (L1, L2, L3, L4) ein zwischen dem Bediengriff (3) und der Antriebseinheit (2) verlaufendes Sicherungsseil (20) vorgesehen ist,
- wobei der eine Endabschnitt (21) des Sicherungsseils (20) am Bediengriff (3) mechanisch fixiert ist und der andere Endabschnitt (22) des Sicherungsseils (20) an der Antriebseinheit (2) mechanisch festgelegt ist,
- wobei die elektrische Leitung (L1, L2, L3, L4) zusammen mit dem Sicherungsseil (20) geführt ist, derart, dass das Sicherungsseil (20) eine Abreißsicherung der elektrischen Leitung (L1, L2, L3, L4) bildet,
- und das Sicherungsseil (20) elektrisch leitend ausgebildet ist und am Bediengriff (3) elektrisch leitend kontaktiert und an der Antriebseinheit (2) elektrisch leitend angeschlossen ist.

2. Arbeitsgerät nach Anspruch 1,
**dadurch gekennzeichnet, dass** der Bediengriff (3) eine äußere, elektrisch leitende Mantelfläche (30) aufweist, die mit dem Sicherungsseil (20) elektrisch leitend kontaktiert ist.

3. Arbeitsgerät nach Anspruch 1 oder 2,
**dadurch gekennzeichnet, dass** das Sicherungsseil (20) einen Potenzialausgleich zwischen dem Bediengriff (3) und der Antriebseinheit (2) herstellt.

4. Arbeitsgerät nach einem der Ansprüche 1 bis 3,
**dadurch gekennzeichnet, dass** der andere Endabschnitt (22) des Sicherungsseils (20) in einem Bereich vor seinem Ende (24) mechanisch festgelegt ist, und dass das bis zum Ende (24) weitergeführte Sicherungsseil (20) eine elektrische Verbindung herstellt.

5. Arbeitsgerät einem der Ansprüche 1 bis 4,
**dadurch gekennzeichnet, dass** das Sicherungsseil (20) mittels Formnippeln (11, 12) mechanisch festgelegt ist.

6. Arbeitsgerät nach einem der Ansprüche 1 bis 5,
**dadurch gekennzeichnet, dass** das Leitungsbündel (L) und das Sicherungsseil (20) innerhalb eines Kabelschlauchs (9) gemeinsam von dem Bediengriff (3) zu der Antriebseinheit (2) geführt sind.

7. Arbeitsgerät nach einem der Ansprüche 1 bis 6,
**dadurch gekennzeichnet, dass** das Sicherungsseil (20) von den elektrischen Leitungen (L1, L2, L3, L4) des Leitungsbündels (L) entkoppelt geführt ist.

8. Arbeitsgerät nach einem der Ansprüche 1 bis 7,
**dadurch gekennzeichnet, dass** das Sicherungsseil (20) mit einer Ummantelung (18) versehen ist.

9. Arbeitsgerät nach einem der Ansprüche 1 bis 8,
**dadurch gekennzeichnet, dass** das Sicherungsseil (20) innerhalb des Gehäuses (15) der Antriebseinheit (2) einen Formnippel (12) trägt.

10. Arbeitsgerät nach einem der Ansprüche 1 bis 9,
**dadurch gekennzeichnet, dass** das Sicherungsseil (20) ein Stahlseil ist.

11. Arbeitsgerät nach einem der Ansprüche 1 bis 10,
**dadurch gekennzeichnet, dass** die Antriebseinheit (2) eine elektrische Antriebseinheit ist.

12. Arbeitsgerät nach einem der Ansprüche 1 bis 11,
**dadurch gekennzeichnet, dass** die Länge der elektrischen Leitung (L1, L2, L3, L4) zwischen seinen Anschlussstellen größer oder gleich ist wie die Länge des Sicherungsseils (20) zwischen seiner mechanischen Anbindung am Bediengriff (3) und seiner mechanischen Anbindung an der Antriebseinheit (2).

## Claims

1. Work device having a drive unit (2) and an operator control handle (3), wherein the work device (1) is a blower (10) having a blower tube (5), and the operator control handle (3) has a plurality of operating elements (B1 to B4) for controlling the drive unit (2), wherein the operator control handle (3) is connected to the drive unit (2) via electrical lines (L1, L2, L3, L4), wherein an electrical line (L1, L2, L3, L4) is attached to a first electrical connection point on the operator control handle (3) and to a second electrical connection point on the drive unit (2),
**characterized in that**
- at least some of the electrical lines (L1, L2, L3, L4) are combined to form a line bundle (L), and the line bundle (L) and the securing cable (20) are jointly guided from the operator control handle (3) to the drive unit (2),
- the line bundle (L) is guided along and outside the blower tube (5), and the operator control handle (3) is held on the blower tube (5),
- in addition to the electrical line (L1, L2, L3, L4) connected to the electrical connection points, a securing cable (20) running between the operator control handle (3) and the drive unit (2) is provided,
- wherein one end section (21) of the securing cable (20) is mechanically fixed to the operator control handle (3) and the other end section (22) of the securing cable (20) is mechanically attached to the drive unit (2),
- wherein the electrical line (L1, L2, L3, L4) is guided together with the securing cable (20) in such a way that the securing cable (20) forms a pull-off prevention means of the electrical line (L1, L2, L3, L4),
- and the securing cable (20) is of electrically conductive design and is in electrically conductive contact with the operator control handle (3) and is electrically conductively connected to the drive unit (2).

2. Work device according to Claim 1,
**characterized in that** the operator control handle (3) has an outer, electrically conductive lateral surface (30) which is in electrically conductive contact with the securing cable (20).

3. Work device according to Claim 1 or 2,
**characterized in that** the securing cable (20) establishes potential equalization between the operator control handle (3) and the drive unit (2).

4. Work device according to one of Claims 1 to 3,
**characterized in that** the other end section (22) of the securing cable (20) is mechanically attached in a region in front of its end (24), and **in that** the securing cable (20) continued as far as the end (24) establishes an electrical connection.

5. Work device according to one of Claims 1 to 4,
**characterized in that** the securing cable (20) is mechanically attached by means of shaped nipples (11, 12).

6. Work device according to one of Claims 1 to 5,
**characterized in that** the line bundle (L) and the securing cable (20) are jointly guided from the operator control handle (3) to the drive unit (2) inside a cable conduit (9).

7. Work device according to one of Claims 1 to 6,
**characterized in that** the securing cable (20) is guided in a manner decoupled from the electrical lines (L1, L2, L3, L4) of the line bundle (L).

8. Work device according to one of Claims 1 to 7,
**characterized in that** the securing cable (20) is provided with a sheathing (18).

9. Work device according to one of Claims 1 to 8,
**characterized in that** the securing cable (20), inside the housing (15) of the drive unit (2), is fitted with a shaped nipple (12).

10. Work device according to one of Claims 1 to 9,
**characterized in that** the securing cable (20) is a steel cable.

11. Work device according to one of Claims 1 to 10,
**characterized in that** the drive unit (2) is an electrical drive unit.

12. Work device according to one of Claims 1 to 11,
**characterized in that** the length of the electrical line (L1, L2, L3, L4) between its connection points is greater than or equal to the length of the securing cable (20) between its mechanical connection to the operator control handle (3) and its mechanical connection to the drive unit (2).

## Revendications

1. Appareil de travail, comprenant une unité d'entraînement (2) et une poignée de commande (3), l'appareil de travail (1) étant un souffleur (10) muni d'un tuyau de soufflage (5), et la poignée de commande (3) présentant plusieurs éléments de commande (B1 à B4) pour la commande de l'unité d'entraînement (2), la poignée de commande (3) étant reliée à l'unité d'entraînement (2) par des lignes électriques (L1, L2, L3, L4), une ligne électrique (L1, L2, L3, L4) étant fixée à un premier point de connexion électrique sur la poignée de commande (3) et à un deuxième point de connexion électrique sur l'unité d'entraînement (2),
**caractérisé en ce que**
- au moins certaines des lignes électriques (L1, L2, L3, L4) sont regroupées en un faisceau de lignes (L), et le faisceau de lignes (L) et le câble de sécurité (20) sont guidés ensemble de la poignée de commande (3) à l'unité d'entraînement (2),
- le faisceau de lignes (L) est guidé longitudinalement et à l'extérieur du tuyau de soufflage (5) et la poignée de commande (3) est maintenue sur le tuyau de soufflage (5),
- en plus de la ligne électrique (L1, L2, L3, L4) connectée aux points de connexion électrique, un câble de sécurité (20) s'étendant entre la poignée de commande (3) et l'unité d'entraînement (2) est prévu,
- une partie d'extrémité (21) du câble de sécurité (20) étant fixée mécaniquement à la poignée de commande (3) et l'autre partie d'extrémité (22) du câble de sécurité (20) étant fixée mécaniquement à l'unité d'entraînement (2),
- la ligne électrique (L1, L2, L3, L4) étant guidée conjointement avec le câble de sécurité (20) de telle sorte que le câble de sécurité (20) constitue un dispositif anti-arrachage de la ligne électrique (L1, L2, L3, L4),
- et le câble de sécurité (20) étant réalisé de manière électriquement conductrice et mis en contact de manière électriquement conductrice au niveau de la poignée de commande (3) et connecté de manière électriquement conductrice à l'unité d'entraînement (2).

2. Appareil de travail selon la revendication 1,
**caractérisé en ce que** la poignée de commande (3) présente une surface latérale extérieure (30) électriquement conductrice qui est mise en contact de manière électriquement conductrice avec le câble de sécurité (20).

3. Appareil de travail selon la revendication 1 ou 2,
**caractérisé en ce que** le câble de sécurité (20) établit une compensation de potentiel entre la poignée de commande (3) et l'unité d'entraînement (2).

4. Appareil de travail selon l'une quelconque des revendications 1 à 3, **caractérisé en ce que** l'autre partie d'extrémité (22) du câble de sécurité (20) est fixée mécaniquement dans une zone avant son extrémité (24), et **en ce que** le câble de sécurité (20) qui continue jusqu'à l'extrémité (24) établit une liaison électrique.

5. Appareil de travail selon l'une quelconque des revendications 1 à 4, **caractérisé en ce que** le câble de sécurité (20) est fixé mécaniquement au moyen de raccords moulés (11, 12).

6. Appareil de travail selon l'une quelconque des revendications 1 à 5, **caractérisé en ce que** le faisceau de lignes (L) et le câble de sécurité (20) sont guidés ensemble de la poignée de commande (3) à l'unité d'entraînement (2) à l'intérieur d'un tube de câble (9).

7. Appareil de travail selon l'une quelconque des revendications 1 à 6, **caractérisé en ce que** le câble de sécurité (20) est guidé de manière découplée des lignes électriques (L1, L2, L3, L4) du faisceau de lignes (L).

8. Appareil de travail selon l'une quelconque des revendications 1 à 7, **caractérisé en ce que** le câble de sécurité (20) est muni d'une gaine (18).

9. Appareil de travail selon l'une quelconque des revendications 1 à 8, **caractérisé en ce que** le câble de sécurité (20), à l'intérieur du boîtier (15) de l'unité d'entraînement (2), porte un raccord moulé (12).

10. Appareil de travail selon l'une quelconque des revendications 1 à 9, **caractérisé en ce que** le câble de sécurité (20) est un câble en acier.

11. Appareil de travail selon l'une quelconque des revendications 1 à 10, **caractérisé en ce que** l'unité d'entraînement (2) est une unité d'entraînement électrique.

12. Appareil de travail selon l'une quelconque des revendications 1 à 11, **caractérisé en ce que** la longueur de la ligne électrique (L1, L2, L3, L4) entre ses points de connexion est supérieure ou égale à la longueur du câble de sécurité (20) entre son attache mécanique à la poignée de commande (3) et son attache mécanique à l'unité d'entraînement (2).
